# EUROPÄISCHE PATENTSCHRIFT

(11) **EP 4 385 909 B1**
(45) Veröffentlichungstag und Bekanntmachung des Hinweises auf die Patenterteilung: **03.12.2025**
(21) Anmeldenummer: 22214086.5
(22) Anmeldetag: 16.12.2022
(51) Int. Cl.: B65B 19/34, A22C 11/00, B65G 47/252, B65G 47/68, B65G 47/90, B65B 35/32, B65B 35/36, B65B 35/56, B65B 63/02, B25J 15/00, B25J 15/02

(54) **VERFAHREN UND ÜBERGABEEINRICHTUNG ZUR ÜBERGABE VON PRODUKTEN VON EINER ERSTEN FÖRDEREINRICHTUNG ZU EINER ZWEITEN FÖRDEREINRICHTUNG**
METHOD AND TRANSFER DEVICE FOR TRANSFERRING PRODUCTS FROM A FIRST CONVEYOR DEVICE TO A SECOND CONVEYOR DEVICE
PROCÉDÉ ET DISPOSITIF DE TRANSFERT POUR TRANSFÉRER DES PRODUITS D'UN PREMIER CONVOYEUR À UN DEUXIÈME CONVOYEUR

(43) Veröffentlichungstag der Anmeldung: 19.06.2024
(60) Teilanmeldung: 25163401.0
(73) Patentinhaber: Hastamat Verpackungstechnik GmbH + Co. KG, 35633 Lahnau (DE)
(72) Erfinder: WEIL, Rainer, 35519 Rockenberg (DE); BORNEMANN, Thomas, 35585 Wetzlar (DE)
(74) Vertreter: advotec.

(56) Entgegenhaltungen:
- EP-A1- 3 254 994
- EP-B1- 1 394 082
- EP-B1- 3 178 742
- DE-A1- 3 223 472
- IT-A1- BO20 090 549
- US-A- 4 364 467
- US-B1- 7 438 192
- US-B2- 7 900 426

## Beschreibung

Die Erfindung betrifft ein Verfahren zur Übergabe von Produkten von einer ersten Fördereinrichtung zu einer zweiten Fördereinrichtung, wobei die Fördereinrichtungen einander kreuzende Förderrichtungen aufweisen nach dem Oberbegriff des Anspruchs 1, sowie eine entsprechende Übergabeeinrichtung nach dem Oberbegriff des Anspruchs 4.

Verfahren zur Übergabe von Produkten von einer ersten Fördereinrichtung zu einer zweiten Fördereinrichtung kommen insbesondere bei Verpackungsmaschinen zur Anwendung, die nach einer Vereinzelung der in Richtung auf eine Abfülleinrichtung geförderten Produkte eine Richtungsänderung in der Förderung der Produkte notwendig machen, um etwa die Produkte von einer horizontalen Förderrichtung in eine vertikale Förderrichtung zu überführen und eine schwerkraftunterstützte Zuführung der Produkte zu einer Abfülleinrichtung ermöglicht, in der die Produkte mit einer Verpackung versehen werden. Dabei ist die Verpackung regelmäßig an die Form der geförderten Produkte angepasst, was beispielsweise bei Produkten, die eine große Längserstreckung aufweisen dazu führt, dass auch die Verpackung, in die die Produkte in der Abfülleinrichtung abgefüllt werden, eine entsprechend große Längserstreckung aufweist.

Selbst bei solchen Produkten, die, wie etwa sogenannte "Salami-Peitschen", eine Segmentierung aufweisen, und die aufgrund der Segmentierung eine Verpackungsmaterial einsparende Verpackung bei einer Stapel- oder Faltkonfiguration der Salami ermöglichen, erfolgt bislang eine derartige Verpackung nur im Falle einer einfachen Segmentierung, also bei zwei durch eine Verbindungsstelle miteinander verbundenen Segmenten, die in Stapelanordnung aufeinanderliegen. Bei Salami-Peitschen, die mehr als zwei Salami-Segmente und somit mehr als eine Verbindungsstelle zwischen den Salami-Segmenten aufweisen, ist es bislang üblich, dass sie in vollständiger Längserstreckung verpackt werden und daher auch ein Verpackungsmaterial in entsprechender Länge benötigt wird.

Aus der IT BO20 090 549 A1 sind ein Verfahren sowie eine Übergabeeinrichtung zur Übergabe von Produkten von einer ersten Fördereinrichtung zu einer zweiten Fördereinrichtung bekannt, wobei die Übergabe mittels Schwenkbewegungen von Greifern um eine horizontale Achse erfolgt.

Der vorliegenden Erfindung liegt die Aufgabe zugrunde, ein Verfahren sowie eine Vorrichtung vorzuschlagen, dass bzw. die eine beträchtliche Einsparung von Verpackungsmaterial bei der Verpackung von mehrfachsegmentierten Produkten mit großer Längserstreckung, wie beispielsweise eine Salami-Peitsche, ermöglicht.

Zur Lösung dieser Aufgabe weist das erfindungsgemäße Verfahren die Merkmale des Anspruchs 1 auf.

Erfindungsgemäß erfolgt die Übergabe mittels einer Schwenkbewegung, bei der eine Produktaufnahme zwischen einer Übernahmeposition gegenüber der ersten Fördereinrichtung und einer Übergabeposition gegenüber der zweiten Fördereinrichtung längs eines Schwenkbogens geführt wird, und während der Schwenkbewegung zunächst eine Verengung und nachfolgend eine Aufweitung eines in der Produktaufnahme gebildeten Produktaufnahmeraums erfolgt.

Das erfindungsgemäße Verfahren ermöglicht es aufgrund der Produktübergabe mittels einer Schwenkbewegung, dass das Produkt bei hinreichend schneller Förderung des Produkts längs eines Schwenkbogens mit Fliehkraft beaufschlagt wird, sodass eine bei Übergabe des Produkts in die Produktaufnahme gefaltete Anordnung des segmentierten Produkts während der Förderung längs des Schwenkbogens bis in die Übergabeposition aufrecht erhalten bleibt, wobei die gefaltete Produktanordnung durch die Verengung des Produktaufnahmeraums zusätzlich zur Fliehkrafteinwirkung noch weiter komprimiert wird und bei Erreichen der Übergabeposition der Kontakt zwischen der Produktaufnahme und dem Produkt durch die Vergrößerung der Produktaufnahme reduziert wird, um eine möglichst kontaktfreie, die komprimierte Faltkonfiguration des Produkts so wenig wie möglich beeinflussende Übergabe mittels der dem Produkt während der Schwenkbewegung in der Produktaufnahme aufgeprägten kinetischen Energie zu ermöglichen.

Das erfindungsgemäße Verfahren ermöglicht es somit, eine Faltkonfiguration des Produkts, die etwa durch ein Aufstauen des längsgestreckten segmentierten Produkts vor der Übernahme in die Produktaufnahme hergestellt werden kann, während der Übergabe von der ersten Fördereinrichtung an die etwa als Abfüllrohr ausgebildete, zur Abfülleinrichtung führende zweite Fördereinrichtung nicht nur aufrechtzuerhalten, sondern darüber hinaus auch durch die während der Schwenkbewegung erfolgende Verengung des Produktaufnahmeraums der Produktaufnahme weiter zu komprimieren. Aufgrund der die komprimierte Faltkonfiguration möglichst wenig störende Übergabe durch Aufweitung der Produktaufnahme vor der Übergabe des Produkts an die zweite Fördereinrichtung ist es möglich, die komprimierten Faltkonfiguration auch während der Abfüllung des Produkts in die Verpackung aufrechtzuerhalten, sodass für eine Verpackung nur eine entsprechend geringe Menge an Verpackungsmaterial erforderlich ist, verglichen mit der Menge an Verpackungsmaterial, die erforderlich wäre, um das segmentierte Produkt in Längserstreckung aufzunehmen.

Erfindungsgemäß erfolgt die Schwenkbewegung mittels eines Schwenkförderers, welcher die Produktaufnahme an einem um eine Schwenkachse verschwenkbaren Schwenkhebel aufweist, sodass über die Beschleunigung des Drehantriebs in Abhängigkeit von der Masse des Produkts die gewünschte Fliehkraft eingestellt werden kann.

Erfindungsgemäß erfolgt in der Übergabeposition eine Übergabe des Produkts aus dem Produktaufnahmeraum in die als Füllrohr einer Abfülleinrichtung ausgebildete zweite Fördereinrichtung, derart, dass das Produkt mit der während der Schwenkbewegung in der Produktaufnahme dem Produkt aufgeprägten kinetischen Energie in das Füllrohr gefördert wird, sodass in der durch das Füllrohr gebildeten zweiten Fördereinrichtung eine Förderung des Produkts in die Verpackung mittels kinetischer Energie erfolgt und ein Kontakt des Produkts mit dem Verpackungsboden mit entsprechender Ausnutzung der Länge der Verpackung sichergestellt ist.

Erfindungsgemäß wurden bei einer Ausführung der ersten Fördereinrichtung mit zwei nebeneinander in einer gemeinsamen Förderebene angeordneten Förderlinien zur Übergabe der Produkte in ein Füllrohr zwei jeweils einer Förderlinie zugeordnete Produktaufnahmen zwischen einer Übernahmeposition in einer zur Förderebene parallelen Übernahmeebene, in der die Übernahme der Produkte von den Förderlinien in die jeweilige Produktaufnahme erfolgt, abwechselnd jeweils zwischen der Übernahmeposition zur Übernahme eines Produkts von einer Förderlinie und einer Übergabeposition zur Übergabe des Produkts an das Füllrohr verschwenkt, derart, dass sich eine Produktaufnahme in der Übernahmeposition befindet, während die andere in der Übergabeposition angeordnet ist, kann die Abfüllleistung der Abfülleinrichtung im Vergleich zu einer Ausführung der ersten Fördereinrichtung mit lediglich einer Förderlinie um das Doppelte gesteigert werden.

Erfindungsgemäß ist die Schwenkbewegung der Produktaufnahme jeweils aus zwei Schwenkbewegungen zusammengesetzt, wobei die eine Schwenkbewegung parallel zur Übernahmeebene und die andere Schwenkbewegung in einer zur Übernahmeebene orthogonal Schwenkebene erfolgt, in der die jeweilige Produktaufnahme und das Füllrohr während der Produktübergabe angeordnet sind, sodass sichergestellt ist, dass dem in der Produktaufnahme angeordneten Produkt in der Phase der Übergabe eine das Produkt in der Produktaufnahme komprimierende Fliehkraft mit überlagerter Schwerkraft aufgeprägt werden kann.

Wenn die von der Produktaufnahme aus der Übernahmeposition in die Übergabeposition ausgeführten Schwenkbewegungen einander nachfolgend und die Zurückführung der Produktaufnahme aus der Übergabeposition in die Übernahmeposition ausgeführten Schwenkbewegungen einander überlagert erfolgen, ist es möglich, die rückführende Bewegung im Vergleich zu der bei der Produktübergabe erfolgenden Bewegung längs einer verkürzten Bewegungsbahn auszuführen.

Besonders vorteilhaft ist es, wenn der Produktaufnahmeraum ausgehend von einer aufgeweiteten Konfiguration zur Übernahme des Produkts von der ersten Fördereinrichtung zunächst in eine verengte Konfiguration und nachfolgend vor Erreichen der Übergabeposition wieder in die aufgeweitete Konfiguration überführt wird, sodass aufgrund der aufgeweiteten Konfiguration eine möglichst kollisionsfreie Übernahme des Produkts von der Fördereinrichtung in die Produktaufnahme erfolgen kann.

Zur Lösung der Aufgabe weist die erfindungsgemäße Übergabeeinrichtung die Merkmale des Anspruchs 4 auf.

Erfindungsgemäß ist die Übergabeeinrichtung zur Übergabe von Produkten von einer ersten Fördereinrichtung zu einer zweiten Fördereinrichtung als Schwenkförderer ausgebildet mit einem an einer Schwenkachse schwenkbar gelagerten Schwenkhebel, der mit einer Produktaufnahme versehen ist zur Übernahme eines Produkts von der ersten Fördereinrichtung und Übergabe des Produkts an die zweite Fördereinrichtung mittels einer zwischen den Fördereinrichtungen ausgeführten Schwenkbewegung, wobei die Produktaufnahme eine Komprimierungseinrichtung zur Verengung eines in der Produktaufnahme ausgebildeten Produktaufnahmeraums aufweist.

Erfindungsgemäß sind bei einer Ausführung der ersten Fördereinrichtung mit zwei nebeneinander in einer gemeinsamen Förderebene angeordneten Förderlinien zur Übergabe der Produkte in eine als Füllrohr einer Abfülleinrichtung ausgebildete zweite Fördereinrichtung zwei Produktaufnahmen am Schwenkförderer ausgebildet, die an jeweils einem auf einer gemeinsamen ersten Schwenkachse angeordneten Schwenkhebel angeordnet sind, wobei die ersten Schwenkachse der Schwenkhebel parallel zur Förderebene angeordnet ist und um eine orthogonal zur Förderebene angeordnete zweite Schwenkachse verschwenkbar ist, sodass eine besonders kompakte Ausgestaltung der Übergabeeinrichtung möglich ist.

Vorzugsweise ist die Produktaufnahme als eine Produktaufnahmeschale ausgebildet mit einer Türeinrichtung zum Verschließen einer an der Produktaufnahmeschale ausgebildeten Aufnahmeöffnung.

Wenn die Produktaufnahmeschale zur Ausbildung der Türeinrichtung zwei gegeneinander verschwenkbare Schalenwände aufweist, ist nicht nur eine Komprimierung des in der Produktaufnahme ausgebildeten Aufnahmeraums möglich, sondern die Größe des Schalenaufnahmeraums kann während der Übernahme des Produkts von der ersten Fördereinrichtung einfach an die Größe des Produkts bzw. das Volumen der Produktkonfiguration angepasst werden.

Nachfolgend wird eine bevorzugte Ausführungsform der Erfindung anhand der Zeichnungen näher erläutert.

Es zeigen:
- **Fig. 1**: Eine im Übergang zwischen einer ersten Fördereinrichtung und einer zweiten Fördereinrichtung angeordnete Übergabeeinrichtung mit zwei Produktaufnahmen in Frontansicht;
- **Fig. 2**: die in **Fig. 1** dargestellte Übergabeeinrichtung in seitlicher Ansicht mit Darstellung eines Schwenkförderers mit den an Schwenkhebeln angeordneten Produktaufnahmen;
- **Fig. 3**: die in den **Fig. 1** und **2** dargestellte Übergabeeinrichtung in perspektivischer Ansicht;
- **Fig. 4**: eine Schnittansicht der in **Fig. 1** dargestellten Übergabeeinrichtung gemäß Schnittlinienverlauf IV-IV;
- **Fig. 5**: einen mit einer Produktaufnahme versehenen Schwenkhebel des Schwenkförderers in Einzeldarstellung;
- **Fig. 6**: eine schematische Darstellung der Schwenkbewegungen einer Produktaufnahme in Draufsicht.

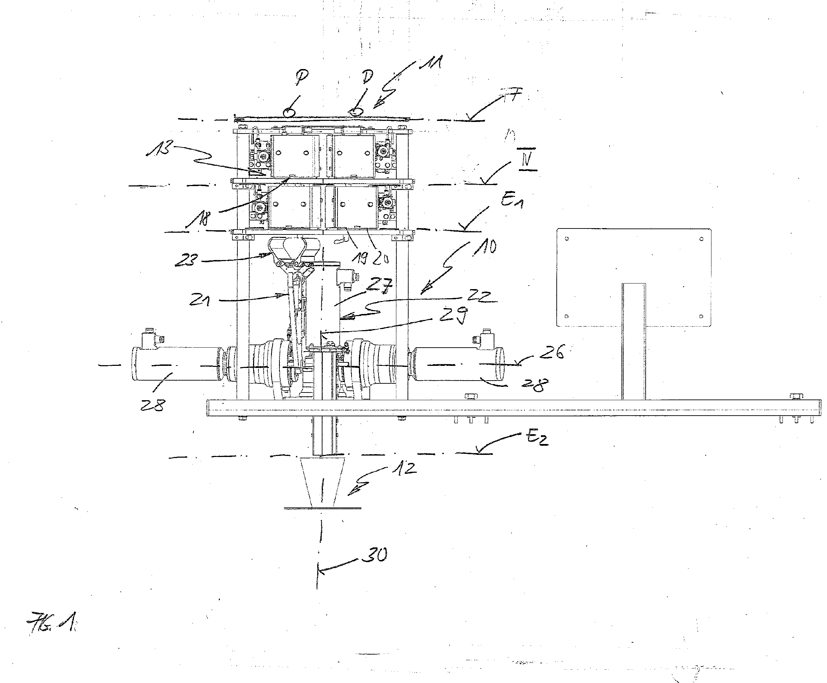

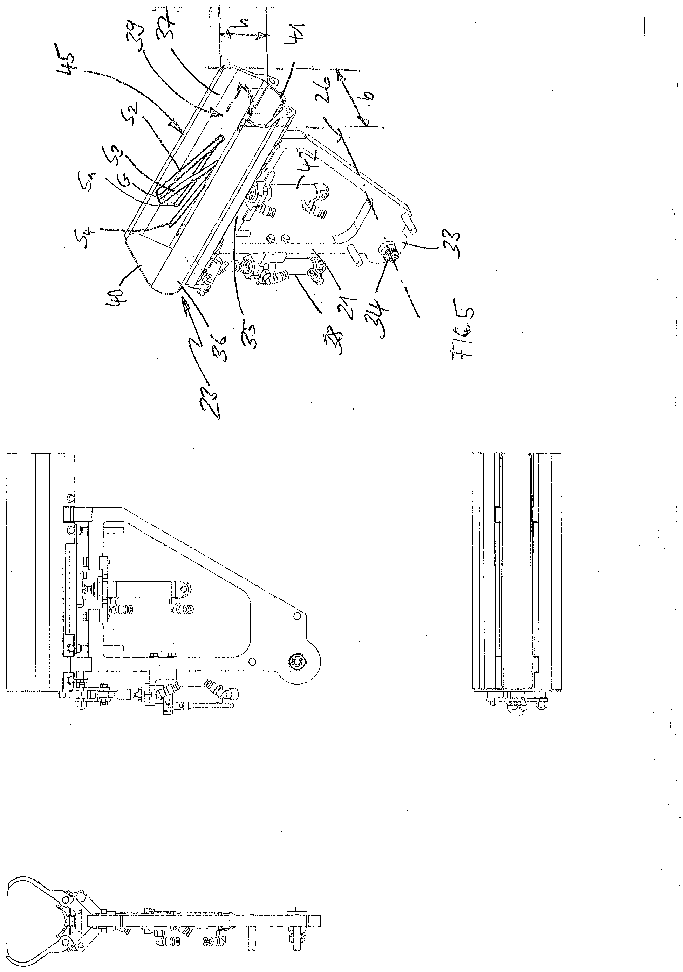

Die **Fign. 1** bis **3** zeigen eine Übergabeeinrichtung 10, die im Fall des vorliegenden Ausführungsbeispiels in Produktförderrichtung zwischen einer als horizontaler Bandförderer ausgebildeten ersten Fördereinrichtung 11 und einer als Füllrohr einer Abfülleinrichtung ausgebildeten Fördereinrichtung 12 angeordnet ist. Mittels der Fördereinrichtung 11 werden einer oberhalb der Übergabeeinrichtung 10 angeordneten, als Kaskadenbehälter 13 ausgebildeten Vereinzelungseinrichtung Produkte P zugeführt, die längs zweier im Wesentlichen parallelen Förderlinien 14, 15 auf der Fördereinrichtung 11 der Übergabeeinrichtung 10 zugefördert werden. Bei den Produkten P handelt es sich im vorliegenden Fall um sogenannte "Salami-Peitschen", also segmentierte Wursterzeugnisse, die, wie beispielhaft in **Fig. 5** dargestellt, vier Salamisegmente S₁, S₂, S₃ und S₄ aufweisen, die jeweils im Wesentlichen starr ausgebildet und über aus der Wurstpelle gebildete scharnierartige Gelenke G miteinander verbunden sind.

Während der Förderung auf der Fördereinrichtung 11 weisen die Produkte P eine durch die Herstellung bedingte, im Wesentlichen geradlinig ausgebildete Längserstreckung auf, wobei die Produkte P an einer Absturzkante 44 der Fördereinrichtung 11 jeweils in einen oberen Behälter 16 des Kaskadenbehälters 13 stürzen, sodass die Segmente S₁, S₂, S₃ und S₄ aus der während der kontinuierlichen Förderung auf der Fördereinrichtung 11 gebildeten Reihenanordnung in eine Konfiguration überführt werden, in der die Segmente S₁, S₂, S₃ und S₄ im Wesentlichen regellos nebeneinander angeordnet sind, wie etwa in **Fig. 5** dargestellt.

Die oberen Behälter 16 des Kaskadenbehälters 13 weisen genauso wie untere Behälter 17 des Kaskadenbehälters 13 eine Bodenklappe 18 mit jeweils zwei, in **Fig. 1** mit gestricheltem Linienverlauf dargestellten, verschwenkbaren Klappenflügeln 19, 20 auf, derart, dass nach einer Öffnung der Klappenflügel 19, 20 die jeweils in den oberen Behältern 16 aufgenommenen Produkte P zunächst in die unteren Behälter 17 gelangen, wo sie sich unmittelbar oberhalb der Übergabeeinrichtung 10 befinden.

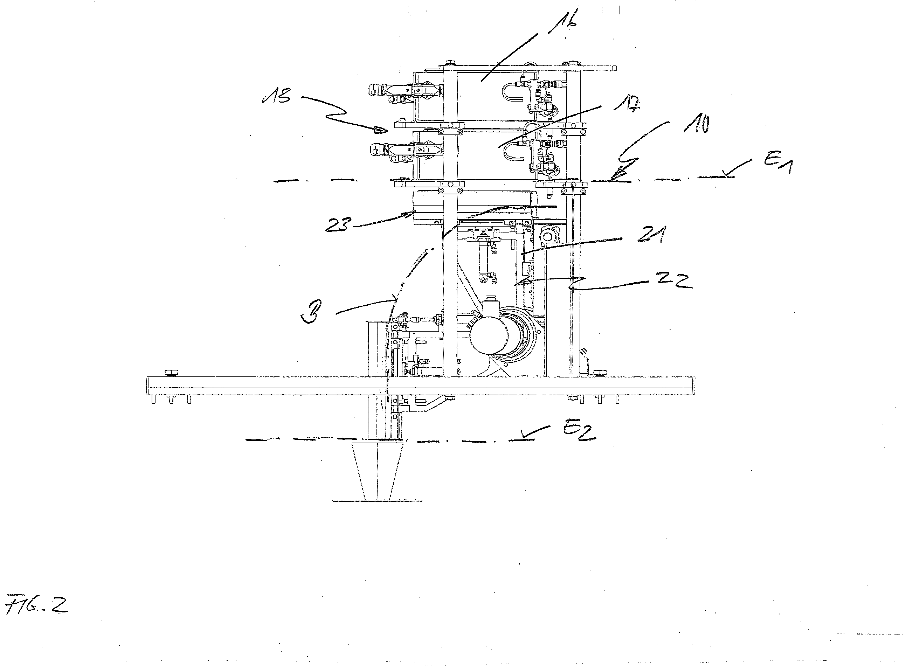

Wie aus einer Zusammenschau der **Fign. 1** und **2** ersichtlich, sind die Behälter 16 und die Behälter 17 unter einem größer werdenden Winkel zueinander angeordnet, um einen zunehmenden horizontalen Abstand zwischen den Produkten P vor Übergabe an die Übergabeeinrichtung 10 zu erzielen. Grundsätzlich dient der Kaskadenbehälter 13 dazu, nach einer Vereinzelung der Produkte P in den oberen Behältern 16 durch die unteren Behälter eine getaktete Übernahme der Produkte P durch die Übergabeeinrichtung 10 zu ermöglichen.

Wenn die Produkte aus den oberen Behältern 16 nach Öffnung der Bodenklappen 18 in die unteren Behälter 17 gelangt sind, befinden sie sich in einer Übernahmeebene E₁ oberhalb der Übergabeeinrichtung 10 und können von jeweils einer an einem Schwenkhebel 21 eines Schwenkförderers 22 der Übergabeeinrichtung 10 angeordneten Produktaufnahme 23 übernommen werden. Hierzu erfolgt eine Öffnung der Bodenklappen 18 der unteren Behälter 17 entsprechend einem durch den Schwenkförderer 22 vorgegebenen Takt immer dann, wenn sich eine der beiden an den Schwenkhebeln 21 des Schwenkförderers 22 angeordneten Produktaufnahmen 23 unter dem jeweiligen unteren Behälters 17 befindet.

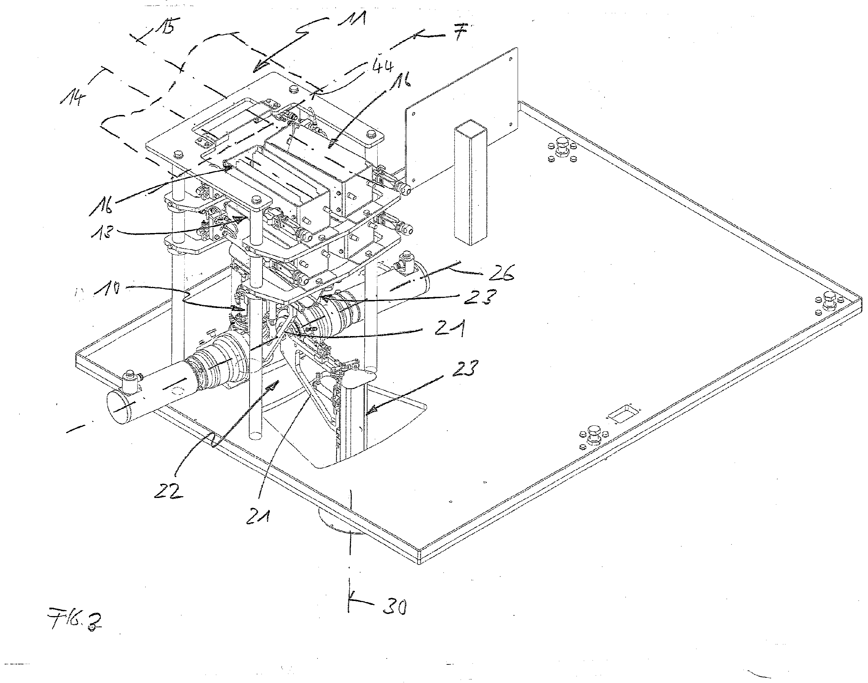

Wie insbesondere aus den **Fig. 1** und **3** ersichtlich, sind die Schwenkhebel 21 des Schwenkförderers 22 auf einer gemeinsamen ersten Schwenkachse 26 angeordnet, die parallel zur Förderebene F und parallel zur Übernahmeebene E₁ angeordnet ist und mittels eines Drehantriebs 29 um eine orthogonal zur Förderebene F bzw. Übernahmeebene E₁ angeordnete zweite Schwenkachse 27 verschwenkbar ist. Die Schwenkhebel 21 werden jeweils von einem auf der Schwenkachse 26 angeordneten Drehantrieb 28 unabhängig voneinander angetrieben, derart, dass die Produktaufnahmen 23 längs eines Schwenkbogens B unabhängig voneinander zwischen der Übernahmeebene E₁ und einer in den **Fign. 1** und **2** dargestellten Übergabeebene E₂ geführt werden.

Die Darstellung der Übergabeeinrichtung in **Fig. 1** zeigt die Anordnung der ersten, hier als Bandförderer ausgebildeten Fördereinrichtung 11 und der zweiten, hier als Füllrohr einer Abfülleinrichtung ausgebildeten Fördereinrichtung 12 mit einander kreuzenden Förderrichtungen, wobei im vorliegenden Fall mittels der ersten Fördereinrichtung 11 eine horizontale Förderrichtung zur Übergabeeinrichtung 10 hin und mittels der zweiten Fördereinrichtung 12 eine zur ersten Förderrichtung 11 orthogonale Förderrichtung definiert wird. Bei dem dargestellten Ausführungsbeispiel weist die erste Förderrichtung 11 zwei nebeneinander in einer gemeinsamen Förderebene F ausgebildete Förderlinien 14, 15 auf, längs denen die Produkte P jeweils in Reihenanordnung gefördert werden, wobei die zweite als Füllrohr ausgebildete Fördereinrichtung 12 lediglich eine Förderlinie 30 definiert, längs der nach Übergabe der Produkte P aus den Produktaufnahmen 23 in das Füllrohr eine Förderung erfolgt und die in der Mitte zwischen den Förderlinien 14, 15 angeordnet ist.

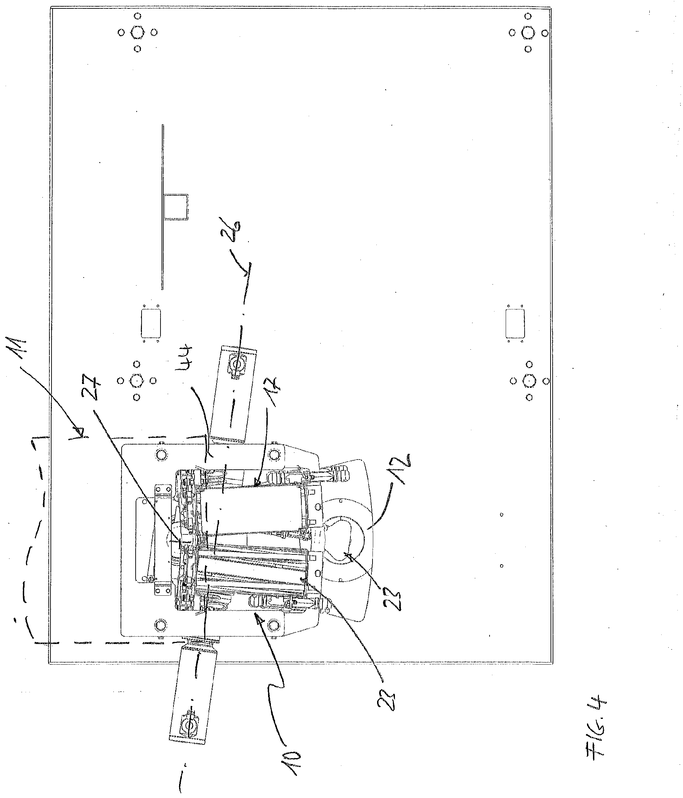

Wie insbesondere **Fig. 4** zeigt, ist sowohl zur Übernahme der Produkte P aus den unteren Behältern 17 des Kaskadenbehälters 13 in der Übernahmeebene E₁ als auch zur Übergabe der Produkte P aus den Produktaufnahmen 23 in die als Füllrohr ausgebildete Fördereinreichung 12 in der Übergabeebene E₂ ist daher ein horizontales Verschwenken der Schwenkachse 26 um die orthogonale Schwenkachse 27 notwendig, um in der Übernahmeebene E₁ eine überdeckende Anordnung der Behälter 17 mit den Produktaufnahmen 23 und in der Übergabeebene E₂ eine überdeckende Anordnung der Produktaufnahmen 23 mit der hier als Füllrohr ausgebildeten Fördereinrichtung 12 zu ermöglichen.

In den **Fig. 1** bis **4** ist der Schwenkförderer 22 in einer Konfiguration dargestellt, in der die linke Produktaufnahme 23 in der Übernahmeebene E₁ angeordnet ist und sich die rechte Produktaufnahme 23 in der Übergabeebene E₂ befindet. Wie **Fig. 5** zeigt, ist die Produktaufnahme 23 an einem auf der Gelenkachse 26 angeordneten Antriebsende 33 mit einem Antriebszapfen 34 versehen, der zur kraftschlüssigen Verbindung mit dem in **Fig. 1** dargestellten Drehantrieb 28 dient. Ein dem Antriebsende 33 gegenüberliegendes Hebelende 35 ist mit der Produktaufnahme 23 versehen, die als Produktschale ausgebildet ist mit einander gegenüberliegenden Schalenwänden 36, 37, die über einen, hier pneumatisch angetriebenen Aktuator 38, der am Schwenkhebel 21 angeordnet ist, gegeneinander verschwenkbar sind, derart, dass ein innerhalb der Produktaufnahme 23 ausgebildeter Produktaufnahmeraum 39 in seiner Breite b vergrößert oder verkleinert werden kann, wobei die Schalenwände 36, 37 an einem das hintere Ende der Produktaufnahme 23 ausbildenden Mitnehmerwand 40 vorbei bewegt werden.

Wie **Fig. 5** weiter zeigt, ist die Produktaufnahme 23 mit einem Schalenboden 41 versehen, der mittels eines ebenfalls am Schwenkhebel 21 installierten weiteren Aktuators 42 zwischen einer in **Fig. 5** dargestellten unteren Position und einer in **Fig. 5** mit strichpunktiertem Linienverlauf dargestellten oberen Position verstellbar ist, so dass neben der Breite b auch die Höhe h des Produktaufnahmeraums 3 veränderbar ist.

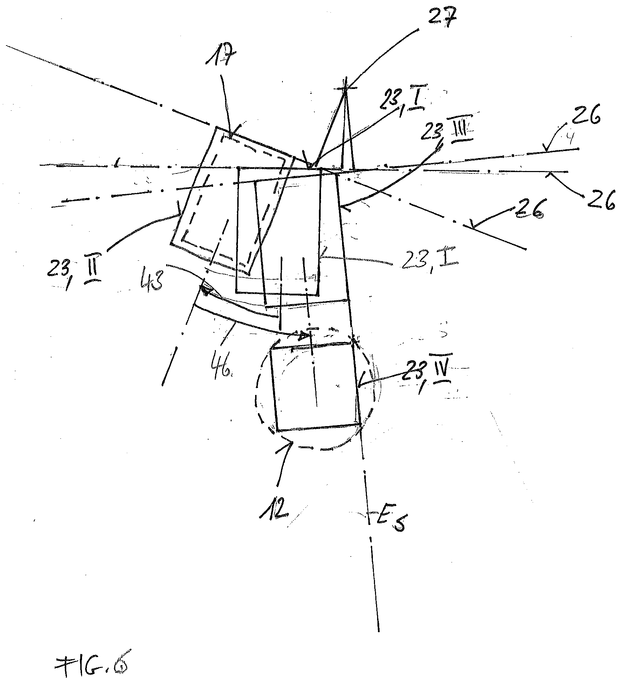

Wie in **Fig. 6** am Beispiel der linken Produktaufnahme 32 schematisch dargestellt, erfolgt bei Inbetriebnahme der Übergabeeinrichtung 10 ausgehend von einer Ausgangsposition I der Produktaufnahme 23 zunächst ein Verschwenken 43 des Schwenkförderers 22 um die orthogonale Schwenkachse 27, so dass sich die Produktaufnahme 23 in einer in den **Fign. 1** bis **4** dargestellten Übernahmeposition II befindet, in der die Produktaufnahme 23 von dem Behälter 17 überdeckt wird, eine von den Schalenwänden 36, 37 gebildete Türeinrichtung 45 der Produktaufnahme 23 sich in geöffneter Stellung befindet und der Schalenboden 41 in seiner unteren Position angeordnet ist. Damit befindet sich die Produktaufnahme 23 in der maximal aufgeweiteten Konfiguration, so dass nach Öffnung der Bodenklappe 18 des Behälters 17 das Produkt P übernommen werden kann.

Nachfolgend erfolgt ein entgegengesetztes Verschwenken 46 um die orthogonale Schwenkachse 27, derart, dass sich die Produktaufnahme 23 und die durch das Füllrohr gebildete zweite Fördereinrichtung 12 in einer gemeinsamen orthogonalen Schwenkebene E_{S} befinden.

Während der Schwenkbewegung der Produktaufnahme 23 in der Übernahmeebene E₁ aus der Position II in die Position III werden die Schalenwände 36, 37 zum Schließen der Türeinrichtung 45 gegeneinander verschwenkt, wobei gleichzeitig oder nach Erreichen der Position III eine Verstellung des Schalenbodens 41 in seine obere Position (siehe **Fig.5****)** erfolgt, so dass der mittels des Aktuators 42 verstellbare Schalenboden 41 eine Komprimierungseinrichtung 47 ausbildet und das in **Fig. 5** innerhalb des geweiteten Produktaufnahmeraums 39 dargestellte Produkt P komprimiert wird, mit der Folge, dass die Produktsegmente S₁ bis S₄ in eine mehr oder weniger parallele und dichter beabstandete Anordnung überführt werden, also das Produktvolumen wesentlich verringert wird.

Ausgehend von der verengten Konfiguration der Produktaufnahme 39 in der Position III der Produktaufnahme 23 erfolgt nun ein Verschwenken der Produktaufnahme 23 längs eines in der Schwenkebene E_{S} ausgebildeten Schwenkbogens B (**Fig. 2**), während der das Produkt P beschleunigt wird und aufgrund der während der Schwenkbewegung auf das Produkt wirkenden Fliehkraft die komprimierte Konfiguration beibehält, so dass der Schalenboden 41 wieder in seine untere Position zurückbewegt werden kann, um den Produktaufnahmeraum 39 für eine Übergabe des Produkts P in die vom Füllrohr ausgebildete zweite Fördereinrichtung 12 nach einem Abstoppen der Schwenkbewegung nach Erreichen der Übergabeposition IV der Produktaufnahme 23 in der Produktübergabeebene E₂ zu ermöglichen.

Kurz vor Erreichen der Übergabeposition IV der Produktaufnahme 23 wird die Türeinrichtung 45 durch Aufschwenken der Schalenwände 36, 37 geöffnet, so dass das Produkt P unmittelbar vor Übergabe in das Füllrohr im Wesentlichen nur noch über die Mitnehmerwand 40 Körperkontakt zur Produktaufnahme 23 hat und die dem Produkt P während der Schwenkbewegung in der orthogonalen Schwenkebene E_{S} in der Produktaufnahme 23 aufgeprägte kinetische Energie im Wesentlichen uneingeschränkt für einen Abwurf des Produkts in das Füllrohr zur Verfügung steht.

Nach Abwurf bzw. Übergabe des Produkts aus der Produktaufnahme 23 wird diese mit einander überlagerten Schwenkbewegungen um die Schwenkachsen 26 und 27 wieder in die Übernahmeposition II in der Übernahmeebene E₁ zurückbewegt.

Während sich die linke Produktaufnahme 23 in der Übergabeposition IV befindet, erfolgt eine Befüllung der rechten Produktaufnahme, so dass diese während der Rückbewegung der linken Produktaufnahme 23 in die Übernahmeebene E₁ eine zur Schwenkbewegung der linken Produktaufnahme 23 gegensinnige Schwenkbewegung in die Übergabeposition in der Übergabeebene E₂ ausführt.

Dadurch, dass die linke und rechte Produktaufnahme 23 abwechselnd jeweils zwischen einer Übernahmeposition II zur Übernahme eines Produkts P von einer Förderlinie 14 bzw. 15 und einer Übergabeposition IV zur Übergabe des Produkts P an die von dem Füllrohr gebildete Fördereinrichtung 12 verschwenkt werden, derart, dass sich eine Produktaufnahme 23 in der Übernahmeposition II befindet, während die andere in der Übergabeposition IV angeordnet ist, kann eine der zweiten Fördereinrichtung 12 nachgeordnete Abfülleinrichtung im Wesentlichen kontinuierlich betrieben werden.

## Patentansprüche

1. Verfahren zur Übergabe von Produkten P von einer ersten Fördereinrichtung (11) zu einer zweiten Fördereinrichtung (12), wobei die Fördereinrichtungen (11, 12) einander kreuzende Förderrichtungen aufweisen, wobei die Übergabe mittels einer Schwenkbewegung erfolgt, bei der eine Produktaufnahme (23) zwischen einer Übernahmeposition II gegenüber der ersten Fördereinrichtung (11) und einer Übergabeposition IV gegenüber der zweiten Fördereinrichtung (12) längs eines Schwenkbogens geführt wird, und während der Schwenkbewegung zunächst eine Verengung und nachfolgend eine Aufweitung eines in der Produktaufnahme (23) gebildeten Produktaufnahmeraums (39) erfolgt, wobei die Schwenkbewegung mittels eines Schwenkförderers (22) erfolgt, welcher die Produktaufnahme (23) an einem um eine Schwenkachse (26) verschwenkbaren Schwenkhebel (21) aufweist, wobei in der Übergabeposition IV eine Übergabe des Produkts P aus dem Produktaufnahmeraum (39) in die als ein Füllrohr einer Abfülleinrichtung ausgebildete zweite Fördereinrichtung (12) erfolgt, derart, dass das Produkt P mit der während der Schwenkbewegung in der Produktaufnahme (23) dem Produkt P aufgeprägten kinetischen Energie in das Füllrohr gefördert wird, wobei bei einer Ausführung der ersten Fördereinrichtung (11) mit zwei nebeneinander in einer gemeinsamen Förderebene F angeordneten Förderlinien (14, 15) zur Übergabe der Produkte P in ein Füllrohr zwei jeweils einer Förderlinie (14, 15) zugeordnete Produktaufnahmen (23) zwischen einer Übernahmeposition II in einer zur Förderebene F parallelen Übernahmeebene E₁, in der die Übernahme der Produkte P von den Förderlinien (14, 15) in die jeweilige Produktaufnahme (23) erfolgt, abwechselnd jeweils zwischen der Übernahmeposition II zur Übernahme eines Produkts P von einer Förderlinie (14, 15) und einer Übergabeposition IV zur Übergabe des Produkts P an das Füllrohr verschwenkt werden, derart, dass sich eine Produktaufnahme (23) in der Übernahmeposition II befindet, während die andere in der Übergabeposition IV angeordnet ist,
**dadurch gekennzeichnet,**
**dass** die Schwenkbewegung der Produktaufnahmen (23) jeweils aus zwei Schwenkbewegungen zusammengesetzt ist, wobei die eine Schwenkbewegung parallel zur Übernahmeebene E₁ und die andere Schwenkbewegung in einer zur Übernahmeebene E₁ orthogonalen Schwenkebene E_{S} erfolgt, in der die jeweilige Produktaufnahme (23) und das Füllrohr während der Produktübergabe angeordnet sind.

2. Verfahren nach Anspruch 1,
**dadurch gekennzeichnet,**
**dass** die von der Produktaufnahme (23) aus der Übernahmeposition II in die Übergabeposition IV ausgeführten Schwenkbewegungen einander nachfolgend und die zur Rückführung der Produktaufnahme (23) aus der Übergabeposition IV in die Übernahmeposition II ausgeführten Schwenkbewegungen einander überlagert erfolgen.

3. Verfahren nach Anspruch 1,
**dadurch gekennzeichnet,**
**dass** der Produktaufnahmeraum (39) ausgehend von einer aufgeweiteten Konfiguration zur Übernahme des Produkts P von der ersten Fördereinrichtung (11) zunächst in eine verengte Konfiguration und nachfolgend vor Erreichen der Übergabeposition IV wieder in die aufgeweitete Konfiguration überführt wird.

4. Übergabeeinrichtung (10) zur Übergabe von Produkten P von einer ersten Fördereinrichtung (11) zu einer zweiten Fördereinrichtung (12), wobei die Fördereinrichtungen (11,12) einander kreuzende Förderrichtungen aufweisen, wobei die Übergabeeinrichtung (10) einen Schwenkförderer (22) aufweist mit einem an einer Schwenkachse (26) schwenkbar gelagerten Schwenkhebel (21), der mit einer Produktaufnahme (23) versehen ist zur Übernahme eines Produkts P von der ersten Fördereinrichtung (11) und Übergabe des Produkts P an die zweite Fördereinrichtung (12) mit Ausführung einer Schwenkbewegung zwischen den Fördereinrichtungen (11, 12), wobei die Produktaufnahme (23) eine Komprimierungseinrichtung (47) zur Verengung eines in der Produktaufnahme (23) ausgebildeten Produktaufnahmeraums (39) aufweist,
**dadurch gekennzeichnet,**
**dass** bei einer Ausführung der ersten Fördereinrichtung (11) mit zwei nebeneinander in einer gemeinsamen Förderebene F angeordneten Förderlinien (14, 15) zur Übergabe der Produkte P in eine als Füllrohr einer Abfülleinrichtung ausgebildete zweite Fördereinrichtungführung (12) zwei Produktaufnahmen (23) am Schwenkförderer (22) ausgebildet sind, die an jeweils einem auf einer gemeinsamen ersten Schwenkachse (26) angeordneten Schwenkhebel (21) angeordnet sind, wobei die erste Schwenkachse (26) der Schwenkhebel (21) parallel zur Förderebene F angeordnet ist und um eine orthogonal zur Förderebene F angeordnete zweite Schwenkachse (27) verschwenkbar ist.

5. Übergabeeinrichtung nach Anspruch 4,
**dadurch gekennzeichnet,**
**dass** die Produktaufnahme (23) als eine Produktaufnahmeschale ausgebildet ist mit einer Türeinrichtung (45) zum Verschließen einer an der Produktaufnahmeschale ausgebildeten Aufnahmeöffnung.

6. Übergabeeinrichtung nach Anspruch 5,
**dadurch gekennzeichnet,**
**dass** die Produktaufnahmeschale zur Ausbildung der Türeinrichtung (45) zwei gegeneinander verschwenkbare Schalenwände (36, 37) aufweist.

## Claims

1. A method for transferring products P from a first conveyor device (11) to a second conveyor device (12), the conveyor devices (11, 12) having intersecting conveying directions, the transfer taking place by means of a pivoting movement, in which a product receptacle (23) is moved along a pivoting arc between a receiving position II relative to the first conveyor device (11) and a transfer position IV relative to the second conveyor device (12), and a product receiving space (39) formed in the product receptacle (23) first narrowing and subsequently widening during the pivoting movement, the pivoting movement being carried out by a pivoting conveyor (22), which has the product receptacle (23) on a pivoting lever (21) configured to pivot about a pivoting axis (26), the product P being transferred from the product receiving space (39) into the second conveyor device (12), which is a filling tube of a filling device, in the transfer position IV in such a manner that the product P is conveyed into the filling tube with the kinetic energy imparted to the product P during the pivoting movement in the product receptacle (23), wherein, if the first conveyor device (11) is configured with two conveyor lines (14, 15) which are disposed next to each other in a shared conveying plane F and which are configured to transfer the products P into a filling tube, two product receptacles (23) each associated with one conveyor line (14, 15) are each alternately pivoted between a receiving position II in a receiving plane E₁, which is parallel to the conveying plane F and in which the products P are received in the respective product receptacles (23) from the conveyor lines (14, 15), between the receiving position II for receiving a product P from a conveyor line (14, 15) and a transfer position IV for transferring the product P to the filling tube in such a manner that one product receptacle (23) is located in the receiving position II while the other one is disposed in the transfer position IV,
**characterized in that**
the pivoting movement of the product receptacles (23) is composed of two pivoting movements in each case, one pivoting movement taking place parallel to the receiving plane E₁ and the other pivoting movement taking place in a pivoting plane E_{S} which is orthogonal to the receiving plane E₁ and in which the product receptacle (23) in question and the filling tube are disposed during product transfer.

2. The method according to claim 1,
**characterized in that**
the pivoting movements from the receiving position II into the transfer position IV executed by the product receptacle (23) take place one after the other, and the pivoting movements executed to return the product receptacle (23) from the transfer position IV into the receiving position II are superimposed.

3. The method according to claim 1,
**characterized in that**
starting from a widened configuration for receiving the product P from the first conveyor device (11), the product receiving space (39) is first narrowed and then widened again before it reaches the transfer position IV.

4. A transfer device (10) for transferring products P from a first conveyor device (11) to a second conveyor device (12), the conveyor devices (11, 12) having intersecting conveying directions, the transfer device (10) comprising a pivoting conveyor (22) having a pivoting lever (21) which is mounted to pivot on a pivoting axis (26) and which is provided with a product receptacle (23) for receiving a product P from the first conveyor device (11) and transferring the product P to the second conveyor device (12) by executing a pivoting movement between the conveyor devices (11, 12), the product receptacle (23) having a compressing device (47) for narrowing a product receiving space (39) formed in the product receptacle (23),
**characterized in that**
if the first conveyor device (11) is configured with two conveyor lines (14, 15) which are disposed next to each other in a shared conveying plane F and which are configured to transfer the products P into a second conveyor device (12), which is a filling tube of a filling device, two product receptacles (23) are formed on the pivoting conveyor (22), the product receptacles (23) each being disposed on a pivoting lever (21) disposed on a shared first pivoting axis (26), the first pivoting axis (26) of the pivoting levers (21) being parallel to the conveying plane F and being configured to pivot about a second pivoting axis (27), which is orthogonal to the conveying plane F.

5. The transfer device according to claim 4,
**characterized in that**
the product receptacle (23) is a product receiving tray having a door mechanism (45) for closing a receiving opening formed on the product receiving tray.

6. The transfer device according to claim 5,
**characterized in that**
for forming the door mechanism (45), the product receiving tray has two tray walls (36, 37) configured to pivot against each other.

## Revendications

1. Procédé pour transférer des produits P d'un premier convoyeur (11) à un deuxième convoyeur (12), les convoyeurs (11, 12) ayant des directions de transport qui se croisent, le transfert étant effectué à l'aide d'un mouvement de pivotement dans lequel un support de produit (23) est déplacé le long d'un arc de pivotement entre une position de réception II par rapport au premier convoyeur (11) et une position de transfert IV par rapport au deuxième convoyeur (12), et un espace de réception de produit (39) formé dans le support de produit (23) se resserrant d'abord et puis s'évasant durant le mouvement de pivotement, le mouvement de pivotement étant effectué par un convoyeur pivotant (22), qui a le support de produit (23) sur un levier pivotant (21) configuré pour pivoter autour d'un axe de pivotement (26), le produit P étant transféré de l'espace de réception de produit (39) dans le deuxième convoyeur (12), qui est un tube de remplissage d'un dispositif de remplissage, dans la position de transfert IV de telle manière que le produit P est transporté dans le tube de remplissage avec l'énergie kinétique transmise au produit P durant le mouvement de pivotement dans le support de produit (23), dans lequel, si le premier convoyeur (11) est configuré avec deux lignes de transport (14, 15) qui sont disposées l'une à côté de l'autre dans un plan de transport F commun et qui sont configurées pour transférer les produits P dans un tube de remplissage, deux supports de produit (23) associés chacun à une ligne de transport (14, 15) sont pivotés chacun en alternance entre une position de réception II dans un plan de réception E₁, qui est parallèle au plan de transport F et dans lequel les supports de produit (23) respectifs reçoivent les produits P des lignes de transport (14, 15), entre la position de réception II pour recevoir un produit P d'une ligne de transport (14, 15) et une position de transfert IV pour transférer le produit P au tube de remplissage de telle manière qu'un support de produit (23) est situé dans la position de réception II tandis que l'autre est disposé dans la position de transfert IV,
**caractérisé en ce que**
le mouvement de pivotement des supports de produit (23) se compose de deux mouvements de pivotement dans chaque case, l'un mouvement de pivotement s'effectuant parallèle au plan de réception E₁ et l'autre mouvement de pivotement s'effectuant dans un plan de pivotement E_{S} qui est orthogonal au plan de réception E₁ and dans lequel le support de produit (23) en question et le tube de remplissage sont disposés durant le transfert de produits.

2. Procédé selon la revendication 1,
**caractérisé en ce que**
les mouvements de pivotement de la position de réception II à la position de transfert IV effectués par le support de produit (23) s'effectuent l'un après l'autre, et les mouvements de pivotement effectués afin de retourner le support de produit (23) de la position de transfert IV à la position de réception II sont superposés.

3. Procédé selon la revendication 1,
**caractérisé en ce que**
partant d'une configuration évasée pour recevoir le produit P du premier convoyeur (11), l'espace de réception de produit (39) est mis d'abord en configuration resserrée et puis remis en configuration évasée avant d'atteindre la position de transfert IV.

4. Dispositif de transfert (10) pour transférer des produits P d'un premier convoyeur (11) à un deuxième convoyeur (12), les convoyeurs (11, 12) ayant des directions de transport qui se croisent, le dispositif de transfert (10) comprenant un convoyeur pivotant (22) ayant un levier pivotant (21) qui est monté de manière pivotant sur un axe de pivotement (26) et qui est muni d'un support de produit (23) pour recevoir un produit P du premier convoyeur (11) et transférer le produit P au deuxième convoyeur (12) en effectuant un mouvement de pivotement entre les convoyeurs (11, 12), le support de produit (23) ayant un dispositif de compression (47) pour resserrer un espace de réception de produit (39) formé dans le support de produit (23),
**caractérisé en ce que**
si le premier convoyeur (11) est configuré avec deux lignes de transport (14, 15) qui sont disposées l'une à côté de l'autre dans un plan de transport F commun et qui sont configurées pour transférer les produits P dans un deuxième convoyeur (12), qui est un tube de remplissage d'un dispositif de remplissage, deux supports de produit (23) sont formés sur le convoyeur pivotant (22), les supports de produit (23) étant disposés chacun sur un levier pivotant (21) disposé sur un premier axe de pivotement (26) commun, le premier axe de pivotement (26) des leviers pivotants (21) étant parallèle au plan de transport F and étant configuré pour pivoter autour d'un deuxième axe de pivotement (27), qui est orthogonal au plan de transport F.

5. Dispositif de transfert selon la revendication 4,
**caractérisé en ce que**
le support de produit (23) est un plateau de réception de produit ayant un mécanisme de porte (45) pour fermer une ouverture de réception formée sur le plateau de réception de produit.

6. Dispositif de transfert selon la revendication 5,
**caractérisé en ce que**
pour former le mécanisme de porte (45), le plateau de réception de produit a deux parois de plateau (36, 37) configurées pour pivoter l'une contre l'autre.
